# EUROPEAN PATENT APPLICATION

(11) **EP 2 985 197 A1**
(43) Date of publication of application: **17.02.2016**
(21) Application number: 14181142.2
(22) Date of filing: 15.08.2014
(51) Int. Cl.: B60T 7/22, B60Q 1/44, B60Q 1/52, G08G 1/09, G08G 1/16

(54) **Brake assistance method, equipment, and use.**

(71) Applicant: Nederlandse Organisatie voor toegepast- natuurwetenschappelijk onderzoek TNO, 2595 DA 's-Gravenhage (NL)
(72) Inventor: The designation of the inventor has not yet been filed
(74) Representative: V.O.

(57) **Abstract**

Brake assistance equipment that is in particular suited for use in road vehicles such as cars. The brake assistance equipment comprises at least one brake light, a brake pedal and a sensor measuring the position of the brake pedal, and a circuit which, based on the signal from the sensor, instructs the brake light to emit r an in time varying pattern of light. The equipment further comprises a camera for detecting the variation in the emitted light. The camera provides a signal that is related to the position of the brake pedal of a preceding vehicle comprising such brake assistance equipment. Further a method for providing brake assistance using the information of the variation in emitted light of a preceding vehicle. The equipment can also be used for road traffic control.

## Description

The present invention relates to brake assistance equipment comprising a brake light, a brake pedal, a pedal position sensor for measuring a position of the brake pedal and for providing a brake signal that is related to the position of the brake pedal. More in particular it relates to such equipment comprising an instructor circuit for receiving the brake signal and which instructor circuit is configured for instructing the brake light to emit light in a time-variant pattern that is related to the brake signal.

The present invention also relates to a method for providing brake assistance in a first vehicle, comprising the steps of (i) providing a brake signal that is related to the intended deceleration of a second vehicle preceding the first vehicle, (ii) instructing the brake light of the second vehicle to emit light in a time-variant pattern that is related to the brake signal.

The present invention also relates to the use of the brake assistance equipment in road traffic control.

### State of the art

Road safety is an important issue in modern society in which more and more people are traveling by car or motorcycle and in which many goods are transported by trucks. An increasing traffic density on roads requires adaptability of the drivers to the driving behaviour of other drivers. Not only for safety reasons but also for maintaining an acceptable flow of traffic. Avoiding a collision with a vehicle in front, more in particular a fast braking vehicle, is a main issue.

Several systems are known for alerting a driver of a vehicle to a possible collision with the vehicle in front. Brake lights are the basis of this safety measure, including the third break light that is common or even mandatory for cars in most countries. Conventional brake lights in motorized road vehicles illuminate as soon as the driver moves the brake pedal. The driver of a closely following vehicle has to react fast to avoid a collision with a preceding vehicle in case of for example an emergency stop of the vehicle in front. A step in shortening the reaction time of a following driver may be found in simply flashing the brake lights during an emergency brake or in using an Adaptive Brake Light (ABL) system by which the flashing pattern depends on the level of braking. US 7,893,823 discloses such a brake light equipment for road vehicles. This known brake assistance equipment comprises a sensor for measuring the position of the brake pedal and a master controller for receiving a signal related to the position of the brake pedal. The equipment further comprises a third brake light of the vehicle, which third brake light is an array of individual light bulbs or light emitting diodes (LEDs) which are controlled by a slave controller. The master controller controls the operation of the slave controller for lighting the lights in the array in sequence and repeatedly at a rate that is among others determined by the positon of the brake pedal.

Many systems exist for assisting drivers of vehicles in driving safe and comfortable. Examples of such systems are Anti-lock Braking System (ABS), Electronic Stability Program (ESP), conventional Cruise Control (CC), and Advanced Driver Assistance Systems (ADAS). Examples of ADAS are Lane Departure Warning (LDW), Adaptive Cruise Control (ACC), and Cooperative Adaptive Cruise Control (CACC).

In ACC radar or laser (e.g. LIDAR) measurements are applied to measure the distance to the vehicle in front. When the distance becomes smaller than a predetermined value, which value may depend on the speed, the system will reduce the speed of the following vehicle or even brake to maintain the desired distance. In CACC, in addition to the distance measurement, the preceding vehicle's intended acceleration is used as a feed-forward signal for adaptive cruise control of the following vehicle, which information is obtained by wireless communication in accordance with the ITS standard (IEEE 802.11p). Generally, the information is updated and transmitted several times per second. Further, the position of the vehicles, and thus their distance can be determined by using the Global Positioning System (GPS). This is required to fuse on-board sensor measurements to the communicated message. When the intended acceleration of the preceding vehicle is known one can follow on very short inter-vehicle distance (approximately at 0.3 second time gap). Short inter-vehicle distances allow higher road efficiency and reduce fuel consumption, in particular for trucks. These cooperative applications rely heavily on wireless communication.

Basically, there are two conflicting demands to systems such as ACC. For safety reasons the distance between two vehicles must be large enough to avoid a collision when the vehicle in front performs an emergency brake. On the other hand a small distance is preferred for an efficient use of the road. CACC allows to drive at smaller distance because not only the measured distance is used but also other information, such as the vehicle's intended acceleration. This information allows a better adaption of the speed of the following vehicle to that of the vehicle in front. More in particular it allows forward loop control. CACC, however, uses wireless communication to transfer information between the driver assistance systems of the vehicles. Wireless communication not only has inherently a certain time delay, but it is also prone to interruption, commonly known as packet loss. In case the communication delays or the amount of packet loss exceeds a certain threshold, the distance of a following vehicle to the preceding vehicle needs to be increased to ensure safety. The choice of how to increase the distance is difficult. One could either by brake very hard, which is uncomfortable but safe, or brake comfortable. However, in the latter case, the situation is unsafe during the transition of increasing the distance to a safe distance. Consequently, the intervention in the behaviour of the following vehicle as initiated by fore example the measured distance by radar or LIDAR is inconvenient and may cause dangerous situations because it may result in an abrupt braking. It will be clear that the potential benefits of CACC cannot be exploited in full with known brake assistance equipment.

The term brake light is used here for a light that is incorporated in a vehicle and which light is used for indicating that the vehicle intends to brake or is braking. A brake light is a light emitting device that may be a single light source such as an incandescent lamp but it may also be an assembly of light sources, for example light emitting diodes that together form the brake light. Those skilled in the art of vehicle design and manufacturing are familiar with the legislation that has to be satisfied.

### Summary of the invention

It is an objective of the present invention to solve the above mentioned problems of known brake assistance systems, in particular to solve the problem that known brake assistance systems do not provide the required driving comfort, safety or both when incorporated in adaptive cruise control systems. This objective of the invention is obtained by a brake assistance system comprising
- a brake light,
- a brake pedal,
- a pedal position sensor for measuring a position of the brake pedal and for providing a brake signal that is related to the position,
- an instructor circuit for receiving the brake signal and configured for instructing the brake light to emit light in a time-variant pattern that is related to the brake signal.
characterised by a camera for detecting the time-variant pattern of the light emitted by a second brake light and for providing an output signal that is related to this time-variant pattern of the second brake light.

In use, the camera of the system incorporated in a following vehicle will detect the light emitted by the brake light of a preceding braking vehicle. In case that the preceding vehicle comprises also brake assistance equipment providing a time-variant pattern of the brake light, the camera will detect this pattern. The effect of providing a camera detecting this time-variant pattern is that the state, in particular the speed, of the following vehicle in a response to the foreseen decelerating of the preceding vehicle is available at an early stage, even before the vehicle actually decelerates. This allows the driver of a following vehicle being informed early and it allows an early automatic adaption of the speed of the following vehicle. In the latter case there is no need for an interaction by a human driver and there is no need to use the wireless communication channel of a CACC for this adaption of the speed of the following vehicle. So human failures are obviated and, when using CACC, the system has become partially redundant which may prevent emergency brakes when the quality of the communication deteriorates. An advantage is that driving in vehicles comprising the brake assistance equipment is more comfortable and safer than driving in vehicles comprising known brake assistance equipment.

In an embodiment of the brake assistance equipment, the brake lights comprise a light emitting diode (LED). In practise often an array of LEDs is applied for one brake light. An effect of using LEDs is that the pattern of the light emitted by the brake light can be varied at a relative high frequency, more in particular at such a frequency that the variation of the pattern is not observable by a human. An advantage is that the information about the intended deceleration can be provided faster to the following vehicle than is possible with, for example, conventional incandescent lamps. A further advantage is that the brake light will look like a conventional brake light for human beings including the driver of the following vehicle.

In an embodiment of the brake assistance equipment the brake signal relates to an interval of positions of the brake pedal. An effect of dividing the range of positions of the brake pedal into discrete intervals is that the brake signal has a relative low number of data. An advantage is that the data communication from the pedal position sensor to the instructor circuit and the data processing may be faster.

In an embodiment of the brake assistance equipment the repetition rate of the time-variant light pattern of the brake light is higher than 20 Hz. An effect of a frequency higher than 20 Hz is that for a human the light intensity looks constant in time. An advantage is that such brake assistance equipment does not change the appearance of the brake lights and that it will satisfy legislation that prohibits flashing brake lights.

In an embodiment of the brake assistance equipment the instructor circuit is configured for receiving the intended deceleration of the vehicle comprising the brake assistance equipment from a model of the vehicle, which vehicle model provides the intended deceleration of the vehicle on input of the brake signal. An effect of using a model of the vehicle is that the intended deceleration approximates the real deceleration better than without the use of a model. An advantage of this effect is that a following vehicle can better anticipate on the real deceleration of the preceding vehicle.

In an embodiment of the brake assistance equipment the equipment comprises two brake lights which in use jointly provide the time-variant pattern. An effect is that for the same number of time-variant patterns of the joint brake lights, each brake light may have less different light patterns for providing the same information about the intended deceleration. Alternatively, more time-variant patterns are possible when combining more than one brake light. An advantage is that either less data have to be transmitted to each brake light or that the time-variant pattern of the joint brake lights may more accurately relate to the brake pedal position.

A further objective of the present invention is to provide a method for improving driving comfort or safety of driving in a vehicle or for improving both comfort and safety. This objective of the invention is obtained by a method for providing brake assistance in a first vehicle, comprising the steps of
- providing a brake signal that is related to the intended deceleration of a second vehicle preceding the first vehicle,
- instructing the brake light of the second vehicle to emit light in a time-variant pattern that is related to the brake signal,
characterised by the steps of
- making multiple images of the time-variant brake light by a camera attached to the first vehicle following the second vehicle,
- relating the multiple images to the time-variant pattern of the brake light of the second vehicle,
- providing, as an output of the camera, an output signal that is related to the intended deceleration of the second vehicle.

Making images of the time-variant brake light by a camera provides information about the intended deceleration of the second vehicle and allows informing the driver of the first vehicle following the second vehicle or automatic control of the brake of the first vehicle. An effect of providing information about the intended deceleration of a preceding vehicle is that the following vehicle, in particular its CACC, or the driver of such a vehicle can anticipate on this deceleration even before the deceleration takes place. An advantage is that such anticipation results in more comfortable and safer driving in particular in motorized road vehicles such as cars and motorcycles.

In an embodiment of the method for providing brake assistance the brake signal is a digital signal. An effect of using a digital signal is that the brake signal can easily be processed and that it may be compatible with other communication means in a vehicle. An advantage of such easy processing and compatibility is that the method can easily be implemented.

In an embodiment of the method for providing brake assistance the intended deceleration is a deceleration within an interval of two values. An effect of dividing the range of intended decelerations into discrete intervals is that a lower number of data has to be transmitted and processed. An advantage is that the data communication and the data processing may be faster.

In an embodiment of the method for providing brake assistance the method comprises the step of providing information about the state of a second vehicle, viz. a vehicle preceding the vehicle for which brake assistance is provided. This information is used for determining the intended deceleration of the second vehicle. An effect is that the intended deceleration of the preceding vehicle as represented by the time-variant brake light of that vehicle is more accurate than without the information about the state of that vehicle. An advantage is that the following vehicle is provided with more accurate information about the expected deceleration of the preceding vehicle.

A still further objective of the present invention is to allow better road traffic control

This objective of the invention is obtained by the use of the brake assistance equipment for traffic control. An effect of using the brake assistance equipment is that information about the intended deceleration of road vehicles comprising the brake assistance equipment is available. An advantage is that the traffic can be controlled in a more sophisticated way than when using only the information whether brake lights are on or off.

### Brief description of the figures

- Fig.1: shows schematically two cars comprising brake assistance equipment;
- Fig.2: shows an example of a modulated time-variant light emission pattern;
- Fig.3: shows an example of a pulsed time-variant light emission pattern;
- Fig.4: shows an example of a coded time-variant light emission pattern;

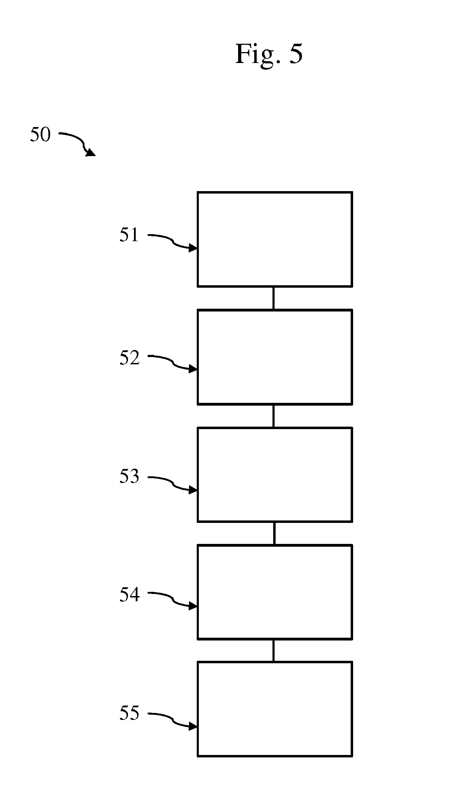

- Fig.5: shows the steps of the method for providing brake assistance.

### Detailed description of the invention

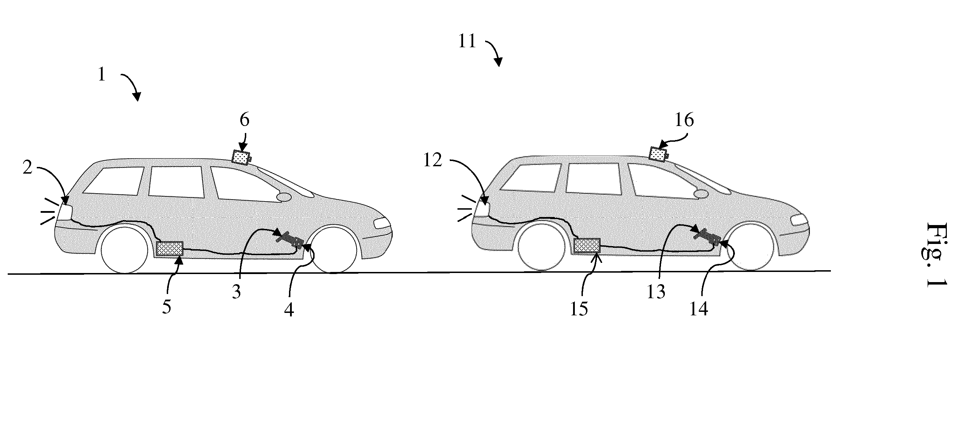

The brake assistance equipment and some of its embodiments will be described here in more detail with reference to the figures 1 to 4. The brake assistance equipment of which an embodiment is shown in figure 1, is in particular suited for use in motorized road vehicles (1), more in particular cars, motor cycles, and trucks. Typically the brake systems of such road vehicles comprise a brake pedal (3) by which the driver can make the vehicle braking, more in general, can make the vehicle decelerating, viz. reducing its speed. The driver can regulate the brake power by moving the brake pedal, usually downwards with one of his feet. So, the position of the brake pedal is related to the deceleration of the vehicle intended by the driver. A completely kicked down brake pedal, for example, may indicate an emergency brake. It is good to note that the position of the brake pedal is related to the intended deceleration. The true deceleration of the vehicle depends on several factors, including the speed of the vehicle, the load of the vehicle, an actuator delay, the friction between the tyres and the road, and other factors. As long as a driver kicks down the brake pedal he indicates that he wants to break further. So, when referring to an intended deceleration, this includes the situation in which the vehicle is already decelerating. During braking, the driver may change the degree of deceleration. So, the intended deceleration may vary during deceleration.

The brake assistance equipment comprises a pedal position sensor (4) for measuring a position of the brake pedal, for example the extent to which the pedal is pushed in relative to its rest position. The output of the sensor is for example an optical or electrical signal that is related to the position of the pedal. Relating here means that the output signal of the pedal position sensor provides information about the position of the brake pedal. This position need not to be an accurate position. It may also be a range of positions within a defined interval. Whereas the position of the pedal is an analogue parameter, the output of the sensor may either be analogue or digital. The full range of displacements of the brake pedal may for example be divided in six intervals, each providing a unique 3-bits code. An example of possible deceleration intervals in such an embodiment is: below 2 m/s²; between 2 and 4 m/s²; between 4 and 6 m/s²; between 6 and 8 m/s²; between 8 and 10 m/s²; and above 10 m/s². In table I an example of a possible 3-bits coding is shown.

**Table I Example of a 3-bits coding of deceleration intervals**

| Intended deceleration [m/s²] | code |
|---|---|
| below 2 | 100 |
| between 2 and 4 | 010 |
| between 4 and 6 | 001 |
| between 6 and 8 | 110 |
| between 8 and 10 | 101 |
| above 10 | 011 |

It may be considered to use one bit for additional coding or control. The different intervals need not to be the same as is the case in this example where the length of an interval is 2 m/s². There may be a differentiation in the length of the intervals which length may depend on the deceleration. For example, the intervals for a strong deceleration may be smaller than for minor decelerations. The analogue brake pedal position may also be sampled otherwise to convert the analogue position to a digital signal related to the position.

Information about the intended deceleration is provided by the brake pedal, more in particular by the sensor measuring the position of the pedal. It will be understood that in a situation where a cruise control is switched on, the braking signal may also be provided by the cruise control, the ACC or the CACC.

The brake pedal (3) is connected with at least one brake light (2) at the rear side of the vehicle (1). The brake light may comprise an electrical or optical circuit for a proper functioning of the light emitting part, which light emitting part may be a light bulb. The circuit may be a an advanced circuit to allow specific functionalities but it may also be just a switch for switching on and off the electrical power. The circuit need not to be situated close to the brake light, it may also be part of a central controller of the vehicle and incorporated in a computer. Whereas motorcycles in general have just one brake light, cars often have three brake lights, viz. one near each rear corner and a third, usually rectangular and horizontally positioned light mounted at a higher position than the other two brake lights. The brake assistance equipment comprises at least one of the brake lights. This brake light may for example be the third brake light of the car or the light at one of the corners in case that the vehicle is a truck. The equipment may however also comprise both brake lights at the corners or all three brake lights.

The brake assistance equipment further comprises an instructor circuit (5) for instructing the brake light to emit light in a time-variant pattern, which pattern is related to the brake signal provided by the pedal position sensor. The pedal position sensor provides an input signal to the instruction circuit, which input signal is related to the position of the brake pedal as discussed above. Preferably, the signal from the sensor to the instructor circuit is a wired optical (glass fibre) or electrical signal, but it may also be a wireless transmitted signal. The instructor circuit is configured such that the enforced variation in time of the light pattern emitted by the brake light is related to the input signal of the circuit. This input signal of the instructor circuit is in its turn related to the position of the brake pedal. The emission pattern may be of any type provided that mutually different patterns allow discrimination of different positions of the brake pedal.

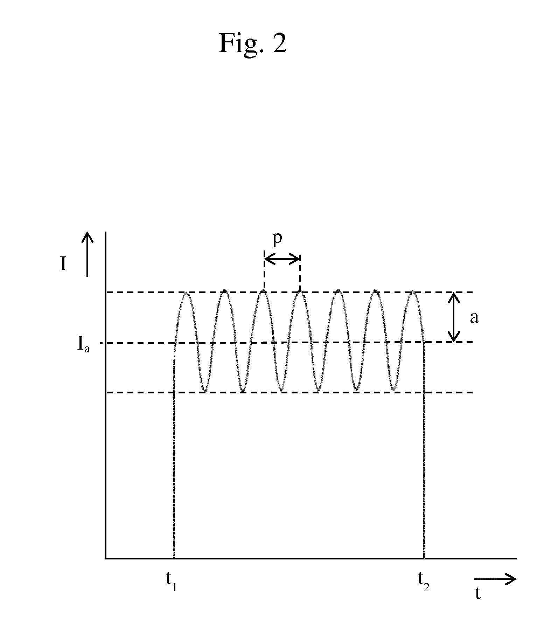

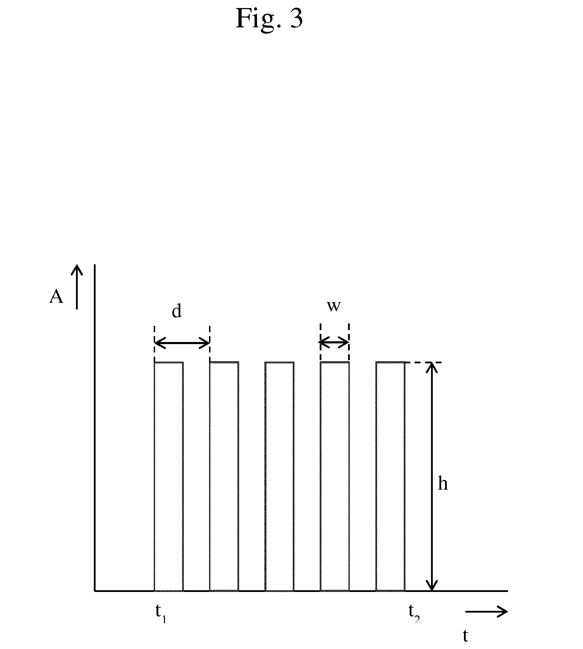

The time-variant emission may for example be a frequency modulated or an amplitude modulated emission. It may also be a simple repetitive pulse of which the height or repetition rate varies as a function of the brake pedal position. In the figures 2 and 3, two examples of possible emission patterns are shown. In figure 2 the light intensity (I) of a modulated brake light is shown as a function of time (t). In the "on" state, so when the brake light must emit light, the light is modulated sinusoidal with an amplitude (a) around an average value (Iₐ) and a frequency or repetition rate (1/p) corresponding to a period (p). In figure 2, the brake light is "on" in the time-interval between time t₁ and time t₂. The amplitude or the period or both can be varied in order to provide different emission patterns. A large period may for example correspond to a minor intended deceleration and a small period to an emergency brake. Similarly, a large amplitude may correspond to an emergency brake while the small amplitude corresponds to a minor deceleration.

In figure 3 another time-variant light emission is shown. Here, the light is pulsed by a repetition rate (1/d) corresponding to a pulse interval (d). Here, three characteristic parameters can be used to vary the pattern; the height (h) of the pulses, the width (w) of the pulses, and the pulse interval. Preferably, one of these parameters is chosen to relate the light emission pattern to the intended deceleration. However, a combination of one or more parameters may be selected to obtain an even larger variation in patterns. It is preferred to use a time-variant pattern that is characterised by a repetition rate or modulation frequency because the analysis of such a pattern is less prone to disturbing influences than a pattern that is characterised by the intensity of the emitted light, viz. the amplitude (a) or the pulse height (h). A repetition rate of a pulse or modulated signal will hardly be influenced by whether conditions such as smog and such rate and frequency may be easier adapted in standards than absolute values of the light intensity. The emitted light may also be coded as a binary code.

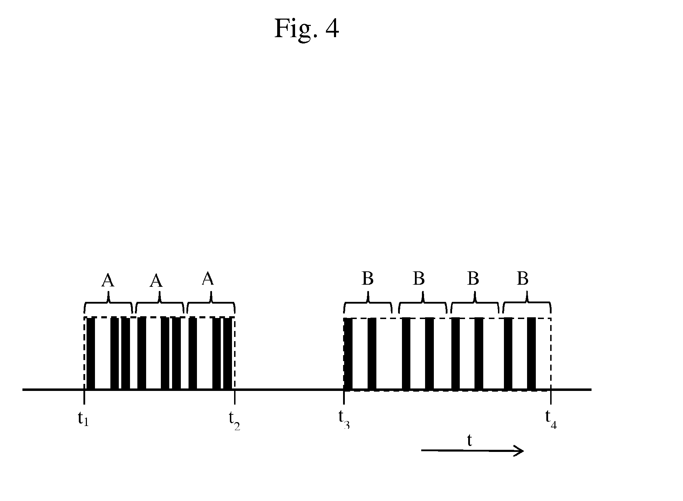

In figure 4, an example of such a coded emission is shown for two different decelerations. This example relates to a 4-bits code and the binary codes (1011) and (1010) are shown as an illustration. Figure 4 shows the emission of light by the brake light when the vehicle is decelerating in the time interval between time t₁ and time t₂ and in the time interval between time t₃ and time t₄. The first code, indicated by A, is repeated as long as the intended deceleration relates to the code A, viz. during the time interval from time t₁ to time t₂. In the time interval between time t₂ and time t₃ the driver may have taken his foot from the brake pedal or the brake light may otherwise have been instructed that there is no intention to brake, for example by CACC. In the time interval between time t₃ and time t₄ there is again a braking activity, but now the intended deceleration is different from the intended deceleration in the time interval between time t₁ and time t₂ and therefore the code (B) in this time interval is different from code A.

The brake assistance equipment further comprises a camera (6) for detecting the time-variant pattern of the light emitted by a brake light (12) of a vehicle (11) that is driving in front of the vehicle (1) comprising the camera(6). The camera may be mounted inside the vehicle or it may be mounted outside the vehicle, provided that the camera is arranged such that the brake lights of a preceding vehicle in a certain area extending in front of the following vehicle can be observed by the camera and that the images of the different time-variant patterns are of sufficient quality that the different patterns can be distinguished. The camera is arranged and configured such that it can observe brake lights that belong to a preceding vehicle that is between 2 meters and 20 meters in front of the following vehicle comprising the camera. The range of the camera may be larger than 20 meter, for example 30 meter or even 50 meter if it is considered to be useful that a preceding vehicle can be monitored over a longer distance . The camera may be an optical camera that is already present in or at the vehicle and which camera needs only to be provided with the proper image recognition software. However, the camera may also be a special camera for use in the brake assistance equipment. Typically, a standard camera may have a frame rate between 50 Hz and 120 Hz. Special camera's may have a higher frame rate, even higher than 400 Hz.

The output signal of the camera can be sent to a controller that is controlling the brakes of the vehicle and by actuating the brakes. This can be either by directly instructing the brakes and thus overruling the cruise control or other driver assistance controllers or by sending a signal to the central processing unit or cruise control of the vehicle. The deceleration of the vehicle will depend on the output signal of the camera. If the camera detects that the vehicle in front intends to decelerate very fast, for example in case of an emergency brake, than the brakes of the following vehicle may be instructed to stop the vehicle as soon as possible, so to perform an emergency brake. On the other hand, when the camera detects that the vehicle in front only intends to slow down slightly, than the following vehicle will be instructed to slow down only slightly. In such a situation it may even not be necessary to activate the brakes, but it may be sufficient just to reduce the power of the motor, for example by reducing the supply of fuel, or in case of an electrical vehicle by reducing the electrical power. The required deceleration can be calculated real-time, taking into account the expected brake path of the preceding vehicle, the initial distance between the two vehicles and the brake characteristics of the following vehicle. The output signal of the camera may also be used to provide the driver with an advise what to do. More in particular to advise the driver how to reduce the speed. Such an advise may for example be to brake strongly or just to reduce the speed slightly. The advise may be provided by optical means, for example lights or lighting figures, or acoustically, for example by a tune.

Standard incandescent lamps that are used in brake lights have a rise time that is typically in the order of hundreds of milliseconds to reach 90% of the asymptotic light output. Such a relative large rise time makes such lamps not very suitable for brake assistance equipment for which a fast response is essential. Light emitting devices with a shorter rise time are therefore preferred, for example fast incandescent lamps, neon lamps or light emitting diodes. In an embodiment of the brake assistance equipment, the brake light comprises one or more LEDs. The LED may be an inorganic LED or it may be an organic LED. LEDs have a short rise time and a short onset time, viz. time that the device starts emitting light after the application of a voltage. Organic LEDs comprise a light emitting organic layer, for instance a polymer or oligomer, and have the additional advantage that such light emitting devices can have all kinds of shapes giving the designer of the vehicle more possibilities to be creative.

In an embodiment of the brake assistance equipment, the instructor circuit is configured for receiving the intended deceleration of the vehicle comprising the brake assistance equipment from a model of the vehicle. The model that is incorporated in a memory circuit, chip, or computer, provides among other parameters the intended deceleration of the vehicle on input of the brake signal. The vehicle model may be a state model that comprises all kinds of information of the state of the vehicle such as speed, angle of repose, possible blocking or slipping of the wheels, angle of the steering wheel, rate of the acceleration or deceleration, yaw rate, intended lane change, location, and other vehicle information.

Vehicles comprising two or more brake lights allow an additional possibility of providing a time-variant light pattern at the rear of a vehicle. In an embodiment of the brake assistance equipment comprising two brake lights, these brake lights each may emit a time-variant pattern on instruction of an instructor circuit. Together, the two patterns form a joint time-variant pattern that is related to the intended deceleration. Because the combination of the two brake lights provides the time-variant pattern that is related to the intended deceleration, the emission pattern of the two brake lights may be different. Preferably, one instructor circuit instructs both brake lights. An advantage of having two brake lights jointly providing a light emission pattern that is related to the intended deceleration is that more information can be provided to a following vehicle within a same time period. This offers the possibility to provide more accurate or detailed information about the intended deceleration of the preceding vehicle. In case that the vehicle comprises three brake lights, all three brake lights may be used to provide the pattern. Because a single image of the two brake lights provides more information than an image of a single brake light or two similar brake lights, the frame rate of the camera making the images may be lower. This reduces the need of using advanced camera's and standard camera's may satisfy. More in particular, each of the two brake lights may have its own pattern. The patterns need even not be of the same type, viz. one of the patterns may be a modulated pattern as shown in figure 2, whereas the pattern of the other brake light is a pattern as shown in figure 3.

In the table II an example of a possible schedule for two brake lights is shown. A pulse rate of 40 Hz corresponds to a pulse distance of 25 milliseconds, whereas a pulse rate of 30 Hz corresponds to a pulse distance of 33.3 milliseconds.

**Table II Example of a relation between light pattern and intended deceleration**

| Intended deceleration [m/s²] | Right brake light | Left brake light |
|---|---|---|
| below 2 | No variation | No variation |
| between 2 and 4 | No variation | pulsed with a 30 Hz pulse repetition rate |
| between 4 and 6 | pulsed with a 30 Hz pulse repetition rate | No variation |
| between 6 and 8 | pulsed with a 30 Hz pulse repetition rate | pulsed with a 30 Hz pulse repetition rate |
| between 8 and 10 | pulsed with a 40 Hz pulse repetition rate | pulsed with a 30 Hz pulse repetition rate |
| above 10 | pulsed with a 30 Hz pulse repetition rate | pulsed with a 40 Hz pulse repetition rate |

The invention also relates to a method for providing brake assistance. According to this method, a brake signal is provided that is related to the intended deceleration of a preceding vehicle. Such an intended deceleration may be manifested in a displacement of a brake pedal, which displacement is measured by a displacement sensor as discussed above. The intended deceleration may also be manifested in a signal from a cruise control system. In both situations information about the deceleration is already available at a moment in time that the vehicle is not decelerating yet or is not decelerating in an extent as intended by the driver or the cruise control. An advantage of this method when compared with methods in which the actual deceleration or distance between two vehicles is used for providing brake instruction is that an earlier adaption of the speed of the following vehicle is possible. Such an earlier adaption may avoid an emergency brake of the following vehicle which otherwise would have been necessary. This improves the driving comfort and safety and may allow a more efficient use of roads.

In an embodiment of the method for providing brake assistance the brake signal is a digital signal, which signal may be an optical or electrical, either transmitted by wire or wireless. Such a digital signal allows easy processing and it allows communication with other control equipment of the vehicle.

In an embodiment of the method for providing brake assistance the intended deceleration is a deceleration within an interval of between two values. Using intervals of deceleration is in particular advantageous when the brake signal is a digital signal because it reduces the number of data that have to be processed. Reducing the number of data is advantageous in view of the processing speed and the required memory. An example of possible lower and upper values for intervals has been given above for a 3-bits code but other intervals may be chosen. Codes based on an larger number of bits may also be used, for example 8-bits in order to provide a brake signal with a better resolution.

The method further comprises the step of instructing the brake light to emit light in a time-variant pattern that is related to the brake signal. This instruction may be provided by an analogue or digital signal. The analogue signal may be a signal that is linearly related to the position of a brake pedal, but it may also be otherwise related to a pedal position. The pedal position may also be divided in discrete steps or it may be sampled at a certain sampling rate to provide a digital signal. An advantage of digital signals is that such signals can easily be processed. The time-variant pattern may be any pattern, including the patterns discussed before. Preferably, it is a pattern that cannot be observed by a human, for example in order to meet regulations related to brake lights or to avoid distraction or confusion of a driver of a following vehicle. Typically the repetition rate of the pattern, which may be a modulation frequency, will be higher than 20 Hz, preferably higher than 50 Hz.

A camera is used to make multiple images of the time-variant brake light of a preceding vehicle. These multiple images are related, by means of image recognition or otherwise, to the time-variant pattern of the brake light. Subsequently, this pattern is related to the intended deceleration of the preceding vehicle. Relating the pattern to the deceleration may be based on a look-up table in which the relation between the different patterns and the intended deceleration is given. Such a look-up table may be stored in a memory of an ACC or CACC. Table I is an example of a possible look-up table. The information about the intended deceleration of the preceding vehicle, as provided by the output signal of the camera, can be used to decelerate the following vehicle automatically, either directly by instructing the brakes or via a cruise control or otherwise. The information may also be used to advise the driver how to reduce speed, for example by braking strongly.

A preferred embodiment of the method comprises the step of providing information about the state of the vehicle, viz. the following vehicle, and using this information for determining the intended deceleration of the vehicle. Many road vehicles comprise equipment for determining the state of the vehicle, which equipment includes sensors for sensing relevant physical properties and a processing unit comprising a software model of the vehicle. Such equipment may comprise sensors for measuring speed, acceleration and deceleration, angle of the steering wheel, or weight. The model may comprise additional information about physical properties of the vehicle. The model may provide information about the expected deceleration of the vehicle based on for example the brake pedal position, a possible slipping of the wheels, and the load of the vehicle. When the intended deceleration of the preceding vehicle is known and thus also the deceleration that is required to maintain distance between the preceding vehicle and the following vehicle, than the state model can provide additional information about how the brakes have to be activated to obtain the proper deceleration.

The brake assistance equipment may also be used in road traffic control. Traffic control systems often use cameras to monitor the traffic on the road. Such cameras may detect when brake lights of road vehicles lighten. When road vehicles comprise the brake assistance equipment, additional information will be available, viz. information about the intended deceleration of the road vehicles. In such a situation the traffic control system can distinguish for example emergency brakes from slow deceleration as may occur frequently in a queue.

## Claims

1. Brake assistance equipment comprising
- a brake light (2),
- a brake pedal (3),
- a pedal position sensor (4) for measuring a position of the brake pedal and for providing a brake signal that is related to the position of the brake pedal,
- an instructor circuit (5) for receiving the brake signal and configured for instructing the brake light to emit light in a time-variant pattern that is related to the brake signal,
**characterised by** a camera (6) for detecting the time-variant pattern of the light emitted by a second brake light and for providing an output signal that is related to this time-variant pattern of the second brake light.

2. Brake assistance equipment according to claim 1, wherein the brake light equipment comprises a light emitting diode.

3. Brake assistance equipment according to any of the preceding claims, wherein the brake signal relates to an interval of positions of the brake pedal.

4. Brake assistance equipment according to any of the preceding claims, wherein the repetition rate of the pattern is higher than 20 Hz.

5. Brake assistance equipment according to any of the preceding claims, wherein the instructor circuit is configured for receiving the intended deceleration of the vehicle comprising the brake assistance equipment from a model of the vehicle, which vehicle model provides the intended deceleration of the vehicle on input of the brake signal.

6. Brake assistance equipment according to any of the preceding claims, comprising two brake lights which in use jointly provide the time-variant pattern.

7. Method (50) for providing brake assistance in a first vehicle, comprising the steps of
- providing (51) a brake signal that is related to the intended deceleration of a second vehicle preceding the first vehicle,
- instructing (52) the brake light of the second vehicle to emit light in a time-variant
pattern that is related to the brake signal,
**characterised by** the steps of
- making (53) multiple images of the time-variant brake light by a camera attached to the first vehicle following the second vehicle,
- relating (54) the multiple images to the time-variant pattern of the brake light of the second vehicle,
- providing (55), as an output of the camera, an output signal that is related to the intended deceleration of the second vehicle.

8. Method according to claim 7, wherein the brake signal is a digital signal.

9. Method according to claim 7 or 8, wherein the intended deceleration is a deceleration within an interval of two values.

10. Method according to any of the claims 7 to 9, further comprising the step of providing information about the state of the second vehicle and using this information for determining the intended deceleration of the second vehicle.

11. Use of the brake assistance equipment in road traffic control.
